# FASCICULE DE BREVET EUROPEEN

(11) **EP 0 581 662 B1**
(45) Date de publication et mention de la délivrance du brevet: **05.02.1997**
(21) Numéro de dépôt: 93401931.6
(22) Date de dépôt: 26.07.1993
(51) Int. Cl.: B60Q 1/14

(54) **Commutateur électrique notamment pour véhicules automobiles comprenant un coulisseau de commande**
Elektrischer Schalter mit Betätigungsschieber für Kraftfahrzeuge
Electrical switch with sliding actuator for automotive vehicle

(30) Priorité: 27.07.1992 FR 9209236
(43) Date de publication de la demande: 02.02.1994
(73) Titulaire: MAGNETI MARELLI FRANCE, 92000 Nanterre (FR)
(72) Inventeur: Gauthier, Christian, F-92200 Neuilly sur Seine (FR)
(74) Mandataire: Ahner, Francis

(56) Documents cités:
- US-A- 4 293 743

## Description

La présente invention concerne le domaine des commutateurs électriques, notamment des commutateurs électriques pour véhicules automobiles.

Plus précisément, la présente invention concerne les commutateurs électriques du type comprenant :
- un boîtier,
- un organe de commande guide à déplacement sur le boîtier,
- une première structure de guidage solidaire du boîtier, et
- un coulisseau comprenant une seconde structure de guidage engagée sur ladite première structure de guidage solidaire du boîtier,
dans lequel l'une desdites structures de guidage comprend un guide généralement rectiligne de sorte que le coulisseau soit guide à translation sur le boîtier et entraîne à translation sur celui-ci lors du déplacement de l'organe de commande, afin de modifier l'état de contacts électriques associés.

De nombreux commutateurs électriques répondant à la définition donnée ci-dessus, ont déjà été proposés.

On peut par exemple se référer aux documents US-A-4293743, US-A-4379954 et US-A-4393280.

La Demanderesse a elle-même proposé différents commutateurs répondant à la définition donnée ci-dessus.

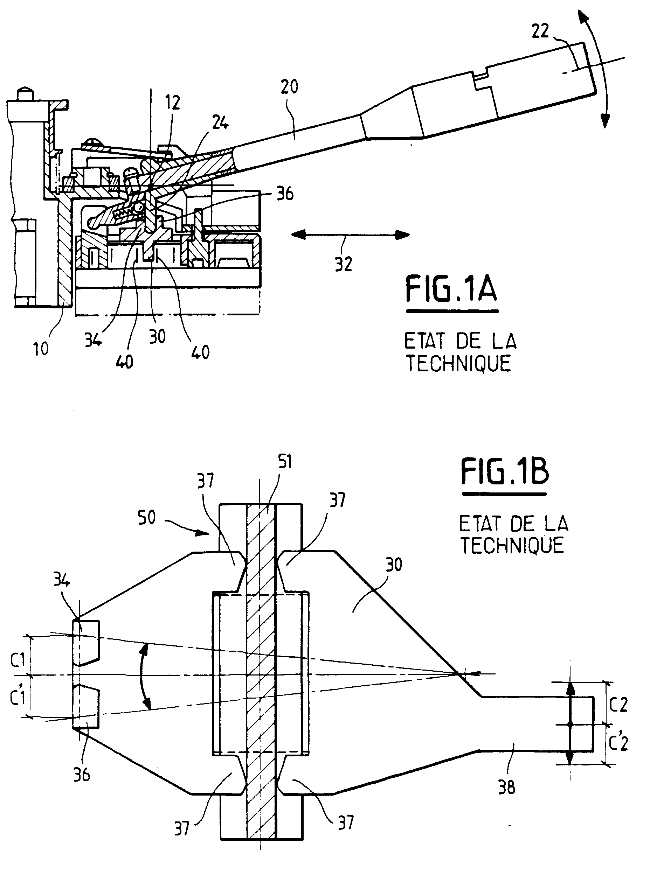

On a représenté sur la figure 1A annexée un commutateur tel que décrit dans les documents précités.

On aperçoit sur la figure 1A, un boîtier 10 qui porte un organe de commande 20 en forme de manette, guidé à pivotement autour d'un axe 12. L'axe 12 est perpendiculaire au plan de la figure 1. La manette 20 est allongée et centrée sur un axe 22. L'axe 22 est sécant de l'axe 12 précité et orthogonal à celui-ci.

A son extrémité interne au boîtier 10, la manette 20 porte un doigt 24 généralement radial par rapport à l'axe 12 et sensiblement perpendiculaire à l'axe 22. Le boîtier 10 porte en outre un coulisseau 30 guidé à translation dans une direction 32 parallèle au plan de la figure 1, c'est-à-dire sensiblement perpendiculaire à l'axe 12.

Le coulisseau 30 est lié au doigt 24 de sorte que le coulisseau soit entraîné à translation selon la direction 32 lors du pivotement de la manette 20 autour de l'axe 12.

Par exemple, le coulisseau 30 peut être muni d'une fourchette à deux branches 34, 36 recevant le doigt 24.

Le déplacement à translation du coulisseau 30 modifie l'état de contacts électriques associés, représentés schématiquement sous la référence 40 sur la figure 1.

On a représenté sur la figure 1B, un exemple de réalisation connu de coulisseau 30 et de première structure de guidage 50 solidaire du boîtier 10.

Selon le mode de réalisation connu représenté sur la figure 1B, la première structure de guidage 50 est formée d'un guide rectiligne 51.

Le coulisseau 30 est guidé sur le guide 51 par des doigts 37. Il possède une fourche à deux branches 34, 36 recevant le doigt 24 de l'organe de commande 20. Le coulisseau 30 actionne les contacts électriques 40 par l'intermédiaire d'un bras de commande 38 opposé à la fourche 34, 36, par rapport au guide 51.

La Demanderesse a constaté qu'avec un tel mode de réalisation, compte-tenu du jeu inévitable et nécessaire entre le guide 51 et les doigts 37, la course utile C2, C'2 obtenu au niveau du bras de commande 38 est inférieure à la course de commande C1, C'1 imprimée à la fourche 34, 36 du coulisseau 30 par l'organe de commande 20.

La présente invention a maintenant pour but de perfectionner les commutateurs connus, en particulier de perfectionner les guidages à translation des coulisseaux.

Ce but est atteint selon la présente invention, grâce à un commutateur presentant les caracteristiques mentionnées en revendication 1 annexée, laquelle est délimitée sous forme de préambule et de partie caracterisante par rapport au document US-A-4393280.

D'autres caractéristiques, buts et avantages de la présente invention apparaîtront à la lecture de la description détaillée qui va suivre, et en regard des dessins annexés donnés à titre d'exemples non limitatifs et sur lesquels :
- les figures 1A et 1B précédemment décrites représentent respectivement une vue schématique en coupe d'un commutateur électrique conforme à l'état de la technique, et un mode de réalisation connu de coulisseau et de ses moyens de guidage,
- la figure 2 représente une vue en plan d'un coulisseau conforme à un mode de réalisation préférentiel de la présente invention,
- la figure 3 représente une vue en plan d'une première structure de guidage conforme au mode de réalisation préférentiel de la présente invention,
- la figure 4 représente une vue en plan illustrant le coulisseau représenté sur la figure 2 engagé sur la première structure de guidage représentée sur la figure 3,
- la figure 5 représente une vue schématique en coupe transversale du coulisseau et de la première structure de guidage conforme au mode de réalisation préférentiel de la présente invention, et
- les figures 6 à 11 représentent diverses variantes de réalisation des structures de guidage conformes à la présente invention.

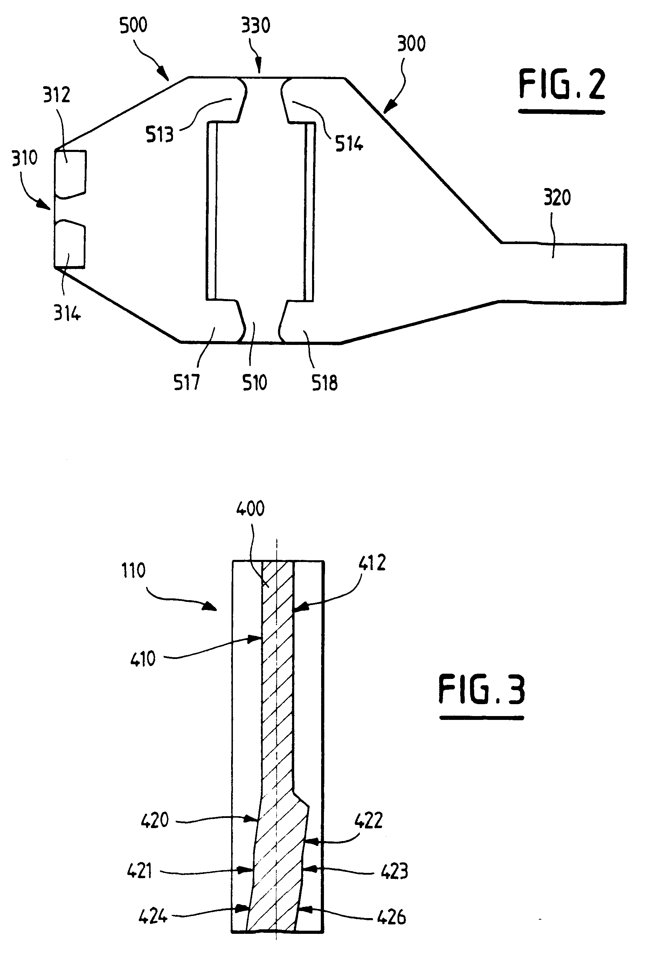

Sur les figures 2 et suivantes annexées, le boîtier du commutateur électrique conforme à la présente invention est représenté schématiquement sous la référence 100.

Plus précisément, sur les figures annexées, le boîtier 100 n'est représenté que partiellement sous forme de deux parois planes et parallèles 102, 104.

Le dispositif commutateur conforme à la présente invention comprend également un organe de commande 200 formé de préférence d'une manette à commande manuelle.

L'organe de commande 200 est guidé à pivotement autour d'un axe 202 par les parois précitées 102, 104 du boîtier 100. Plus précisément, l'organe de commande 200 est guidé à pivotement autour de l'axe 202 par deux tourillons coaxiaux 204, 206 solidaires de l'organe de commande 200 et engagés dans des alésages complémentaires 106, 108 formés respectivement dans les parois 102, 104 du boîtier.

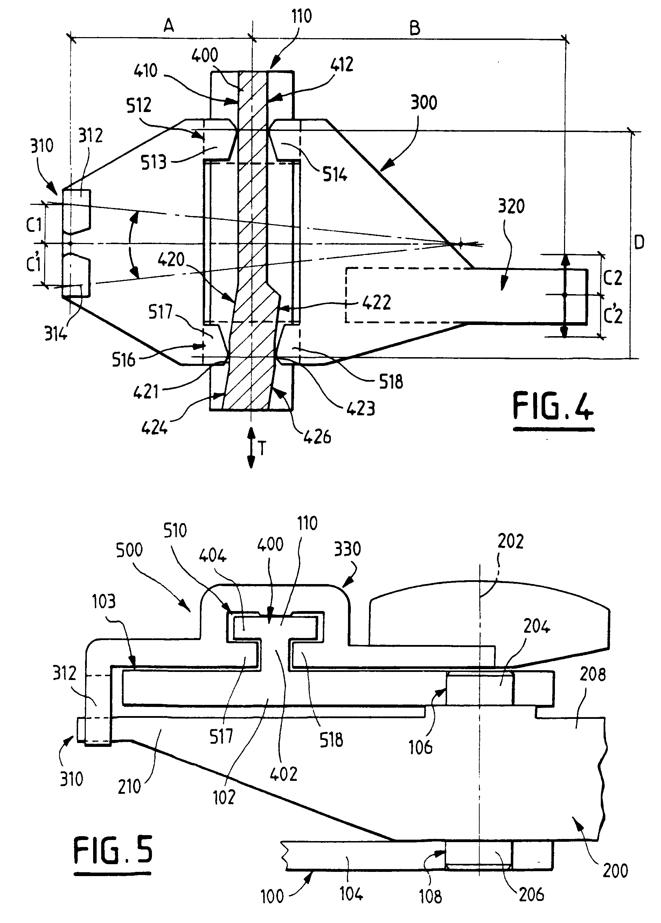

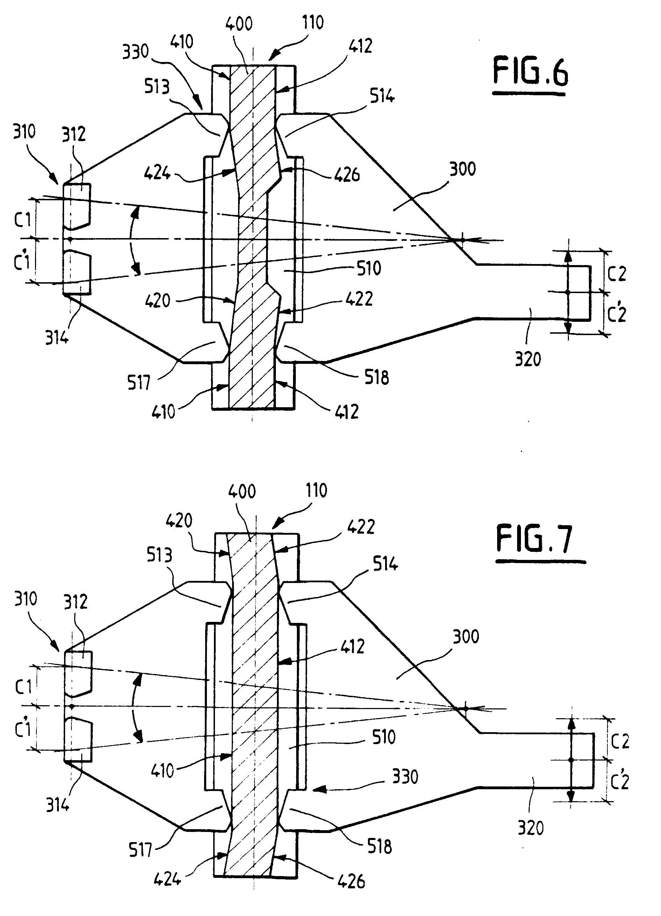

L'axe 202 s'étend perpendiculairement aux parois 102, 104, soit parallèlement au plan de la figure 5 et perpendiculairement au plan de la figure 4.

L'organe de commande 200 est placé entre les deux parois 102, 104 du boîtier 100.

L'organe de commande 200 comprend deux éléments 208, 210 généralement rectilignes et orientés radialement par rapport à l'axe 202. Les éléments 208, 210 sont de préférence sensiblement diamétralement opposés par rapport à l'axe 202 et coaxiaux entre eux.

L'élément 208 de plus grande longueur est accessible à l'extérieur du boîtier 100, et adapté pour être manipulé à la main par un utilisateur afin d'entraîner l'organe de commande 200 à pivotement autour de l'axe 202.

L'élément 210 coopère avec le coulisseau 300 du commutateur pour entraîner celui-ci à translation dans une direction transversale à l'axe 202, comme cela va être précisé par la suite.

A cette fin, le boîtier 100 comprend une première structure de guidage 110.

Selon le mode de réalisation préférentiel représenté sur les figures annexées, notamment sur la figure 5, cette première structure de guidage 110 est formée d'un rail 400 en saillie sur la surface externe 103 de la paroi 102 du boîtier opposée à l'organe de commande 200.

De préférence, le rail 400 possède une section droite en forme de T.

Plus précisément encore, le rail 400 représenté sur la figure 5 comprend un pied 402 orienté perpendiculairement à la paroi 102 et relié à celle-ci, lequel pied 402 est surmonté d'une tête 404 de plus forte largeur orientée parallèlement à la paroi 102.

Selon le mode de réalisation préférentiel représenté sur les figures 3, 4 et 5, le pied 402 du rail 400, qui sert à guider le coulisseau 300 est délimité essentiellement par deux surfaces principales planes et parallèles entre elles 410, 412. Les surfaces 410, 412 s'étendent parallèlement à la direction de translation du coulisseau 300 et perpendiculairement à la surface 103 de la paroi 102 du boîtier. Cette direction de translation est référencée T.

On précisera par la suite la géométrie du rail 400 formant la première structure de guidage 110.

Le coulisseau 300 peut faire l'objet de nombreuses formes de réalisation.

Le coulisseau 300 comprend une seconde structure de guidage 330 apte à coopérer avec la première structure de guidage 110 pour guider le coulisseau 300 à translation sur le boîtier 100.

Selon le mode de réalisation représenté sur les figures annexées, la seconde structure de guidage 330 est formée d'un ensemble 500 qui comprend une chambre 510 apte à recevoir le rail 400 composant la première structure de guidage 110. Plus précisément encore, selon le mode de réalisation représenté sur les figures 2 et suivantes annexées, le logement 510 comprend au niveau de son contour d'ouverture, et à proximité de chacune de ses extrémités axiales 512, 516, une paire de doigts de guidage 513, 514 d'une part, 517, 518 d'autre part.

Les doigts de guidage de chaque paire 513, 514 d'une part ; 517, 518 d'autre part, se font faces et sont dirigés l'un vers l'autre. Ils sont placés respectivement de part et d'autre du pied 402 du rail en T 400 formant la première structure de guidage 110. Plus précisément, les doigts de guidage 513, 514, 517 et 518 sont placés entre la tête évasée 404 du rail 400 et la paroi 102 du boîtier. Ainsi, l'engagement des doigts de guidage 513, 514, 517, 518 sous la tête évasée 404 du rail 400 de part et d'autre du pied 402 assure un auto-verrouillage du coulisseau 300 sur le boîtier 100. En effet, le coulisseau 300 ne peut être retiré que par translation relative par rapport au boîtier 100, selon la direction de translation T parallèle au rail 400.

Pour assurer ce guidage, la distance séparant les doigts de guidage 513, 514 d'une part, et 517, 518 d'autre part, doit être sensiblement complémentaire de la largeur du pied 402 du rail 400.

Le coulisseau 300 est muni d'une fourche 310 à deux branches 312, 314. Les deux branches 312, 314 s'étendent perpendiculairement à la paroi 102 du boîtier et sensiblement parallèlement à l'axe 202. L'écartement entre les deux branches 312, 314 est complémentaire de l'extrémité de l'élément 210 de l'organe de commande 200. Cet élément 210 est ainsi placé dans la fourche 310 entre les branches 312, 314.

L'homme de l'art comprendra aisément que de ce fait, le pivotement de l'organe de commande 200 autour de l'axe 202 entraîne le coulisseau 300 à translation selon la direction T transversale à l'axe 202.

Le coulisseau 300 est en outre muni d'un bras de commande 320. Le bras de commande 320 s'étend sensiblement parallèlement à la paroi 102 et perpendiculairement à la direction de translation T du coulisseau. Le bras de commande 320 est situé à l'opposé de la fourche 310 par rapport à la première structure de guidage 110.

La distance A séparant la fourche 310 de la première structure de guidage 110 et la distance B séparant l'extrémité active du bras de commande 320 de cette même première structure de guidage 110 sont assez importantes en pratique. En revanche, la distance D séparant les doigts de guidage 513 et 517 et les doigts de guidage 514 et 518 est relativement courte.

Pour ces raisons, l'homme de l'art comprendra aisément qu'en raison du jeu inévitable et nécessaire entre la première structure de guidage 110 et la seconde structure de guidage 330, les courses utiles C2, C'2 obtenues au niveau de l'extrémité du bras de commande 320, de part et d'autre d'une position de repos, soient inférieures aux courses de commande correspondantes C1, C'1 imposées à la fourchette 310 par l'organe de commande 200, si comme cela était le cas jusqu'ici dans les commutateurs classiques et comme cela est illustré sur la figure 1B, le pied 402 de la première structure de guidage 400 est délimité uniquement par deux surfaces latérales planes et parallèles 410, 412.

Pour remédier à cet inconvénient et garantir une course utile C2, C'2 au niveau du bras de commande 320 au moins égale à la course de commande C1, C'1 au niveau de la fourche d'entraînement 310, il est prévu selon l'invention, sur l'une des structures de guidage 110, 330, plus précisément sur la première structure de guidage 400 selon le mode de réalisation des figures 2 à 7, au moins un tronçon incliné par rapport à la direction de translation T du coulisseau 300.

Plus précisément sur la figure 4, on trouve ainsi quatre tronçons 420, 422, 424, 426.

Les tronçons 420, 422, 424, 426 sont adaptés pour solliciter le coulisseau 300 à pivotement autour d'un axe fictif situé sur le côté de la première structure de guidage 110 opposée au bras de commande 320.

Les tronçons inclinés 420, 422 sont placés en regard, de part et d'autre du pied 402. Ils prolongent respectivement les surfaces planes et parallèles 410, 412. De même, les tronçons 424, 426 sont placés en regard, de part et d'autre du pied 402 du rail 400. Les différents tronçons inclinés 420, 422, 424, 426 sont placés sur une extrémité commune du rail 400 selon le mode de réalisation représenté sur la figure 4. Ainsi, ces différents tronçons inclinés 420, 422, 424, 426 coopèrent avec les mêmes doigts de guidage 517, 518. Plus précisément, les tronçons 420 et 424 coopèrent avec le doigt de guidage 517, tandis que les tronçons inclinés 422, 426 coopèrent avec le doigt de guidage 518.

Les tronçons inclinés 420, 424 sont séparés par un tronçon plan 421 parallèle à la surface 410 et à la direction de translation. Les tronçons inclinés 422, 426 sont séparés par un tronçon plan 423 parallèle à la surface 412 et par conséquent au tronçon 421 placé en regard ainsi qu'à la direction de translation T.

Le coulisseau 300 occupe une position stable lorsque les doigts de guidage 517, 518 sont placés respectivement au regard des tronçons 421, 423 parallèles à la direction de translation T. En revanche, le coulisseau 300 occupe des positions instables lorsque les doigts 517 et 518 se déplacent sur les tronçons inclinés 420, 422 ou encore sur les tronçons inclinés 424, 426.

De préférence, les tronçons inclinés 420, 422, 424, 426 sont des tronçons plans qui tangentent un cercle centré sur un axe opposé à l'extrémité active du bras de commande 320 par rapport à la première structure de guidage 110 lequel axe est parallèle à l'axe 202. Toutefois, en variante, ces tronçons 420, 422, 424 et 426 peuvent être formés de secteurs de cylindre centrés sur un axe opposé à ladite extrémité active du bras de commande 320 par rapport à la première structure de guidage 110 lequel axe est parallèle à l'axe 202.

Les tronçons 420, 422, 424, 426 ont ainsi un effet antagoniste des forces de rappel élastique des supports de contacts électriques. Ils tendent en effet à faire pivoter le coulisseau 300 autour d'un axe opposé au bras de commande 320, par rapport à la première structure de guidage 110.

L'homme de l'art comprendra aisément que l'inclinaison des tronçons 420, 422, 424, 426 par rapport au guide rectiligne formé par les surfaces planes et parallèles 410, 412 peut être adaptée soit pour compenser uniquement le jeu entre les structures de guidage 110, 330, soit pour amplifier la course utile C2, C'2 au niveau de l'extrémité active du bras de commande 320 par rapport à la course de commande C1, C'1 imprimée à la fourchette 310.

Selon la première variante de réalisation représentée sur la figure 6, les tronçons inclinés 420, 422 de la première structure de guidage 110 coopèrent avec les doigts de guidage 517, 518 tandis que les tronçons inclinés 424, 426 sont placés à l'extrémité opposée de la structure de guidage 110 pour coopérer avec les doigts de guidage 513, 514. On retrouve sur la figure 6, sur l'extérieur des tronçons inclinés 420, 422 et 424, 426 des surfaces planes 410, 412 parallèles à la direction de translation T et servant de guide généralement rectiligne.

Selon la seconde variante de réalisation représentée sur la figure 7, la coopération tronçons inclinés/doigts de guidage est inversée par rapport à la représentation donnée sur la figure 6.

En effet, selon la figure 7, les tronçons 420, 422 coopèrent avec les doigts de guidage 513, 514 tandis que les tronçons 424, 426 coopèrent avec les doigts de guidage 517, 518. Cette fois, les surfaces 410, 412 parallèles à la direction de translation T et formant guide rectilignes sont prévues en position médiane du rail 400, soit entre la paire de tronçons inclinés 420, 422 et la paire de tronçons inclinés 424, 426.

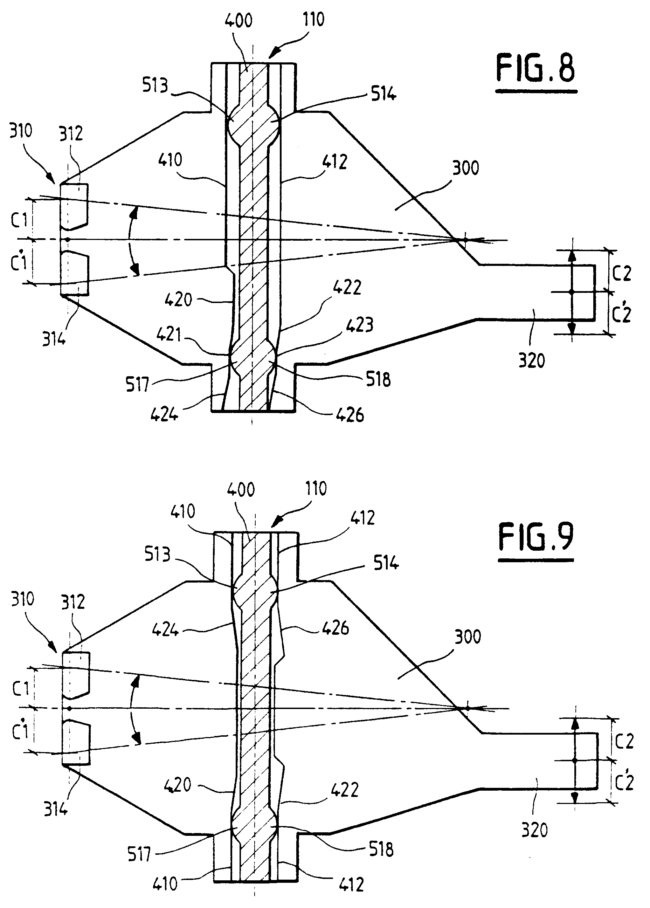

On a représenté sur les figures 8, 9 et 10, trois variantes de réalisation qui correspondent respectivement aux variantes de réalisation représentées sur les figures 4, 6 et 7 précédemment décrites, moyennant cependant une inversion de la position du guide rectiligne et des tronçons inclinés associés, ainsi que des doigts de guidage. En effet, sur les figures 8, 9 et 10 les doigts de guidage 513, 514, 517 et 518 sont formés sur le pied d'un rail formant la première structure de guidage 110, tandis que les surfaces 410, 412 formant le guide généralement rectiligne et les tronçons inclinés associés 420, 422, 424, et 426 sont prévus non plus sur le rail solidaire du boîtier 100, mais sur le coulisseau 300, au niveau de la seconde structure de guidage.

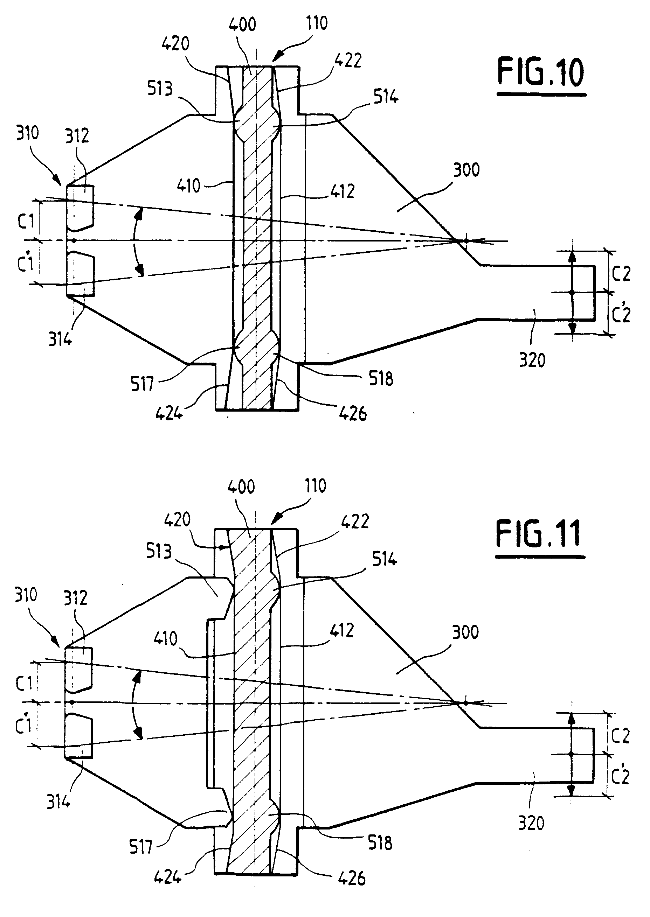

Selon une autre variante de réalisation représentée sur la figure 11, on peut combiner les variantes précitées.

On aperçoit en effet sur la figure 11 une première structure de guidage 110, formée d'un rail de guidage solidaire du boîtier 100 qui comprend d'un côté une surface 410 parallèle à la direction de translation T et deux tronçons inclinés 420, 424, et de l'autre côté deux doigts de guidage 514, 518, tandis que le coulisseau 300 comprend une seconde structure de guidage 330 formée, respectivement d'un premier côté de deux doigts de guidage 513, 517, et de l'autre côté d'une surface plane 412 parallèle à la direction de translation T et de deux tronçons inclinés 422, 426.

Selon encore une autre variante de réalisation, on peut rendre le rail de guidage en T 400 représenté sur les figures 5 à 11 solidaire du coulisseau 300 sous forme de seconde structure de guidage 330, tandis que le logement 510 complémentaire représenté sur les figures 5 à 11 serait solidaire du boîtier 100 sous forme de première structure de guidage 110.

## Revendications

1. Commutateur électrique, notamment pour véhicules automobiles, du type comprenant :
- un boîtier (100),
- un organe de commande (200) guidé à déplacement sur le boîtier (100),
- une première structure de guidage (110) solidaire du boîtier (100),
- un coulisseau (300) comprenant une seconde structure de guidage (330) engagée sur ladite première structure de guidage (110),
- une structure d'entraînement (310) apte à coopérer avec l'organe de commande (200) et un bras de commande (320) apte à coopérer avec des contacts électriques
dans lequel l'une desdites structures de guidage (110, 330) comprend un guide (400, 410) généralement rectiligne de sorte que le coulisseau (300) soit guidé à translation sur le boîtier (100) et entraîné à translation sur celui-ci lors du déplacement de l'organe de commande (200), afin de modifier l'état des contacts électriques associés,
caractérisé par le fait que la structure d'entraînement (310) et le bras de commande (320) du coulisseau (300) sont placés de part et d'autre de la première structure de guidage (110), et le guide généralement rectiligne (400) comprend au moins un tronçon (420, 422, 424, 426) incliné par rapport à la direction de translation (T) du coulisseau (300), adapté pour solliciter le coulisseau (300) à pivotement autour d'un axe situé sur le côté de la première structure de guidage (110) opposé au bras de commande (320).

2. Commutateur électrique selon la revendication 1, caractérisé par le fait que le tronçon incliné (420, 422, 424, 426) est adapté pour compenser le jeu défini entre les deux structures de guidage (110, 330).

3. Commutateur électrique selon la revendication 1, caractérisé par le fait que le tronçon incliné (420, 422, 424, 426) est adapté pour amplifier la course utile au niveau du bras de commande (320) du coulisseau (300) par rapport à la course de commande imprimée à la structure d'entraînement (310) de ce coulisseau (300).

4. Commutateur électrique selon l'une des revendications 1 à 3, caractérisé par le fait que chaque tronçon incliné (420, 422, 424, 426) est plan.

5. Commutateur électrique selon la revendication 4, caractérisé par le fait que chaque tronçon (420, 422, 424 ,426) tangente un cercle centré sur l'axe opposé au bras de commande (320) du coulisseau (300) par rapport à la première structure de guidage (110).

6. Commutateur électrique selon l'une des revendications 1 à 5, caractérisé par le fait que chaque tronçon incliné (420, 422, 424, 426) est incurvé.

7. Commutateur électrique selon la revendication 6, caractérisé par le fait que chaque tronçon incurvé (420, 422, 424, 426) est formé d'un secteur de cylindre centré sur un axe opposé au bras de commande (320) du coulisseau (300) par rapport à la première structure de guidage (110).

8. Commutateur électrique selon l'une des revendications 1 à 7, caractérisé par le fait qu'il comprend deux paires de tronçons inclinés (420, 424 ; 422, 426) séparés respectivement par des tronçons plans (421, 423) parallèles à la direction de translation (T).

9. Commutateur électrique selon l'une des revendications 1 à 8, caractérisé par le fait que les différents tronçons inclinés (420, 422, 424, 426) possèdent tous sensiblement la même inclinaison par rapport à la direction de translation (T) du coulisseau (300).

10. Commutateur électrique selon l'une des revendications 1 à 9, caractérisé par le fait que la seconde structure de guidage comprend au moins deux doigts de guidage (513, 514, 517, 518).

11. Commutateur électrique selon l'une des revendications 8 à 10, caractérisé par le fait que deux tronçons inclinés (420, 424) coopèrent avec un même doigt de guidage (517).

12. Commutateur électrique selon l'une des revendications 8 à 10, caractérisé par le fait que chaque doigt de guidage (513, 514, 517, 518) coopère avec un tronçon incliné unique (420, 422, 424, 426).

13. Commutateur électrique selon l'une des revendications 1 à 12, caractérisé par le fait que l'une des structures de guidage (110) a la forme générale d'un rail (400) présentant une section droite en T, tandis que l'autre structure de guidage (230) est formée d'un logement complémentaire (500).

14. Commutateur électrique selon l'une des revendications 1 à 13, caractérisé par le fait que le guide rectiligne (400) comprenant au moins un tronçon incliné (420, 422, 424, 426) est formé sur la première structure de guidage (110) solidaire du boîtier (100).

15. Commutateur électrique selon l'une des revendications 1 à 13, caractérisé par le fait que le guide rectiligne (400) comprenant au moins un tronçon incliné (420, 422, 424, 426) est formé sur la seconde structure de guidage (330) solidaire du coulisseau (300).

16. Commutateur électrique selon l'une des revendications 1 à 13, caractérisé par le fait qu'il est prévu un premier guide rectiligne comprenant des tronçons inclinés sur la première structure de guidage (110) solidaire du boîtier (100) et un second guide rectiligne (330) comprenant des tronçons inclinés sur le coulisseau (300).

## Claims

1. An electrical switch, in particular for motor vehicles, the switch being of the type comprising:
• a housing (100);
• a control member (200) guided in displacement on the housing (100);
• a first guide structure (110) secured to the housing (100);
• a slider (300) comprising a second guide structure (330) engaged on said first guide structure (110);
• a drive structure (310) suitable for co-operating with the control member (200) and a control arm (320) suitable for co-operating with electrical contacts;
in which one of said guide structures (110, 330) comprises a generally rectilinear guide (400, 410) such that the slider (300) is guided in translation on the housing (100) and is driven in translation thereon during the displacement of the control member (200) in order to modify the state of the associated electrical contacts;
the switch being characterized by the fact that the drive structure (310) and the control arm (320) of the slider (300) are placed on either side of the first guide structure (110), and the generally rectilinear guide (400) comprises at least one length (420, 422, 424, 426) inclined relative to the translation direction (T) of the slider (300), and adapted to urge the slider (300) to pivot about an axis situated on the side of the first guide structure (110) remote from the control arm (320).

2. An electrical switch according to claim 1, characterized by the fact that the inclined length (420, 422, 424, 426) is adapted to compensate for the clearance defined between the two guide structures (110, 330).

3. An electrical switch according to claim 1, characterized by the fact that the inclined length (420, 422, 424, 426) is adapted to amplify the working stroke of the control arm (320) of the slider (300) relative to the control stroke imparted to the drive structure (310) of the slider (300).

4. An electrical switch according to any one of claims 1 to 3, characterized by the fact that each inclined length (420, 422, 424, 426) is plane.

5. An electrical switch according to claim 4, characterized by the fact that each length (420, 422, 424, 426) is tangential to a respective circle centered on the axis opposite to the control arm (320) of the slider (300) relative to the first guide structure (110).

6. An electrical switch according to any one of claims 1 to 5, characterized by the fact that each inclined slope (420, 422, 424, 426) is curved.

7. An electrical switch according to claim 6, characterized by the fact that each curved length (420, 422, 424, 426) is constituted by a sector of a cylinder centered on an axis opposite to the control arm (320) of the slider (300) relative to the first guide structure (110).

8. An electrical switch according to any one of claims 1 to 7, characterized by the fact that it comprises two pairs of inclined lengths (420, 424; 422, 426) respectively separated by plane lengths (421, 423) parallel to the translation direction (T).

9. An electrical switch according to any one of claims 1 to 8, characterized by the fact that the various inclined lengths (420, 422, 424, 426) all have substantially the same inclination relative to the translation direction (T) of the slider (300).

10. An electrical switch according to any one of claims 1 to 9, characterized by the fact that the second guide structure comprises at least two guide fingers (513, 514, 517, 518).

11. An electrical switch according to any one of claims 8 to 10, characterized by the fact that two inclined lengths (420, 424) co-operate with the same guide finger (517).

12. An electrical switch according to any one of claims 8 to 10, characterized by the fact that each guide finger (513, 514, 517, 518) co-operates with a single inclined length (420, 422, 424, 426).

13. An electrical switch according to any one of claims 1 to 12, characterized by the fact that one of the guide structures (110) is generally in the form of a rail (400) having a T-shaped right section, while the other guide structure (230) in the form of a complementary recess (500).

14. An electrical switch according to any one of claims 1 to 13, characterized by the fact that the rectilinear guide (400) comprising at least one inclined length (420, 422, 424, 426) is formed on the first guide structure (110) secured to the housing (100).

15. An electrical switch according to any one of claims 1 to 13, characterized by the fact that the rectilinear guide (400) comprising at least one inclined length (420, 422, 424, 426) is formed on the second guide structure (330) secured to the slider (300).

16. An electrical switch according to any one of claims 1 to 13, characterized by the fact that a first rectilinear guide comprising inclined lengths is provided on the first guide structure (110) secured to the housing (100), and a second rectilinear guide (330) comprising inclined lengths is provided on the slider (300).

## Patentansprüche

1. Elektrischer Schalter, insbesondere für Kraftfahrzeuge, mit folgenden Merkmalen:
- ein Gehäuse (100),
- ein Steuerelement (200), das verschiebbar auf dem Gehäuse (100) geführt ist,
- eine erste Führungsstruktur (110), die einstückig mit dem Gehäuse (100) ausgebildet ist,
- ein Schieber (300), der eine zweite Führungsstruktur (330) aufweist, welche mit der ersten Führungsstruktur (110) in Eingriff ist,
- eine Mitnehmerstruktur (310), welche mit dem Steuerelement (200) und einem Steuerarm (320) zusammenwirkt, welcher mit elektrischen Kontakten zusammenwirken kann,
wobei die eine dieser Führungsstrukturen (110, 330) eine im wesentlichen geradlinige Führung (400, 410) aufweist, so daß der Schieber (300) auf dem Gehäuse (100) translatorisch geführt ist und bei der Bewegung des Steuerelementes (200) auf diesem in einer Translationsbewegung mitgenommen wird, um den Zustand der zugeordneten elektrischen Kontakte zu verändern,
dadurch **gekennzeichnet**, daß die Mitnehmerstruktur (310) und der Steuerarm (320) des Schiebers (300) zu beiden Seiten der ersten Führungsstruktur (110) angeordnet sind, und die im wesentlichen geradlinige Führung (400) wenigstens einen Abschnitt (420, 422, 424, 426) aufweist, der relativ zu der Verschiebungsrichtung (T) des Schiebers (300) geneigt ist, um dem Schieber (300) eine Schwenkbewegung um eine Achse zu vermitteln, welche auf der dem Steuerarm (320) gegenüberliegenden Seite der ersten Führungsstruktur (110) liegt.

2. Elektrischer Schalter nach Anspruch 1, dadurch **gekennzeichnet**, daß der geneigte Abschnitt (420, 422, 424, 426) das Spiel ausgleichen kann, welches zwischen den beiden Führungsstrukturen (110, 330) besteht.

3. Elektrischer Schalter nach Anspruch 1, dadurch **gekennzeichnet**, daß der geneigte Abschnitt (420, 422, 424, 426) den Betätigungsweg auf der Höhe des Steuerarmes (320) des Schiebers (300) im Verhältnis zu dem Betätigungsweg vergrößern kann, welcher der Mitnehmerstruktur (310) des Schiebers (300) vermittelt wird.

4. Elektrischer Schalter nach einem der Ansprüche 1 bis 3, dadurch **gekennzeichnet**, daß jeder geneigte Abschnitt (420, 422, 424, 426) eben ist.

5. Elektrischer Schalter nach Anspruch 4, dadurch **gekennzeichnet**, daß jeder Abschnitt (420, 422, 424, 426) eine Tangente an einem Kreis bildet, dessen Zentrum auf der Achse liegt, welche im Verhältnis zur ersten Führungsstruktur (110) dem Steuerarm (320) des Schiebers (300) gegenüberliegt.

6. Elektrischer Schalter nach einem der Ansprüche 1 bis 5, dadurch **gekennzeichnet**, daß jeder geneigte Abschnitt (420, 422, 424, 426) gebogen ist.

7. Elektrischer Schalter nach Anspruch 6, dadurch **gekennzeichnet**, daß jeder gebogene Abschnitt (420, 422, 424, 426) aus einem zylindrischen Sektor gebildet ist, der auf einer Achse zentriert ist, welche im Verhältnis zur ersten Führungsstruktur (110) dem Steuerarm (320) des Schiebers (300) gegenüberliegt.

8. Elektrischer Schalter nach einem der Ansprüche 1 bis 7, dadurch **gekennzeichnet**, daß er zwei Paare geneigte Abschnitte (420, 424; 422, 426) aufweist, welche jeweils durch ebene Abschnitte (421, 423) getrennt sind, die zu der Verschiebungsrichtung (T) parallel sind.

9. Elektrischer Schalter nach einem der Ansprüche 1 bis 8, dadurch **gekennzeichnet**, daß die unterschiedlichen geneigten Abschnitte (420, 422, 424, 426) alle ungefähr dieselbe Neigung im Verhältnis zu der Verschiebungsrichtung (T) des Schiebers (300) aufweisen.

10. Elektrischer Schalter nach einem der Ansprüche 1 bis 9, dadurch **gekennzeichnet**, daß die zweite Führungsstruktur wenigstens zwei Führungsfinger (513, 514, 517, 518) aufweist.

11. Elektrischer Schalter nach einem der Ansprüche 8 bis 10, dadurch **gekennzeichnet**, daß zwei geneigte Abschnitte (420, 424) mit demselben Führungsfinger (517) zusammenwirken.

12. Elektrischer Schalter nach einem der Ansprüche 8 bis 10, dadurch **gekennzeichnet**, daß jeder Führungsfinger (513, 514, 517, 518) mit einem einzigen geneigten Abschnitt (420, 422, 424, 426) zusammenwirkt.

13. Elektrischer Schalter nach einem der Ansprüche 1 bis 12, dadurch **gekennzeichnet**, daß eine der Führungsstrukturen (110) im wesentlichen die Form einer Schiene (400) mit einem T-förmigen Querschnitt hat, während die andere Führungsstruktur (230) von einer komplementären Aufnahme (500) gebildet wird.

14. Elektrischer Schalter nach einem der Ansprüche 1 bis 13, dadurch **gekennzeichnet**, daß die geradlinige Führung (400), welche wenigstens einen geneigten Abschnitt (420, 422, 424, 426) aufweist, auf der ersten Führungsstruktur (110) ausgebildet ist, welche aus einem Stück mit dem Gehäuse (110) ist.

15. Elektrischer Schalter nach einem der Ansprüche 1 bis 13, dadurch **gekennzeichnet**, daß die geradlinige Führung (400), welche wenigstens einen geneigten Abschnitt (420, 422, 424, 426) aufweist, auf der zweiten Fürungsstruktur (330) ausgebildet ist, welche aus einem Stück mit dem Schieber (300) ist.

16. Elektrischer Schalter nach einem der Ansprüche 1 bis 13, dadurch **gekennzeichnet**, daß er eine erste geradlinige Führung mit geneigten Abschnitten auf der ersten Führungsstruktur (110), die aus einem Stück mit dem Gehäuse (100) ist und eine zweite geradlinige Führung (330) mit geneigten Abschnitten auf dem Schieber (300) aufweist.
